# EUROPÄISCHE PATENTANMELDUNG

(11) **EP 2 261 517 A1**
(43) Veröffentlichungstag der Anmeldung: **15.12.2010**
(21) Anmeldenummer: 10165268.3
(22) Anmeldetag: 08.06.2010
(51) Int. Cl.: F16B 25/00, F16B 35/04

(54) **Furchschraube**

(30) Priorität: 08.06.2009 DE 102009025222
(71) Anmelder: Arnold Umformtechnik GmbH & Co. KG, 74670 Forchtenberg-Ernsbach (DE)
(72) Erfinder: Werthwein, Bernd, 74670, Forchtenberg-Sindringen (DE); Jakob, Thomas, 34292, Ahnatal (DE)
(74) Vertreter: Patentanwälte Ruff, Wilhelm, Beier, Dauster & Partner

(57) **Zusammenfassung**

Es wird eine Furchschraube mit einem polygonalen abgerundeten oder kreisrunden Querschnitt vorgeschlagen, die zwischen einem Schraubenkopf (1) und einer Furchzone (7) einen konischen Schraubenschaft (5) mit einem Furchgewinde (8) aufweist. Diese Furchschraube ist dazu bestimmt, eine Befestigung an einem Sackloch oder einem Durchgangsloch vorzunehmen, das ebenfalls konisch ausgebildet ist. Aufgrund der angenähert übereinstimmenden Konizität, die im günstigsten Falle identisch ist, tritt ohne eine erhebliche Erhöhung des Einschraubdrehmoments eine näherungsweise konstante Gewindeüberdeckung über praktisch die gesamte Länge des in Eingriff mit dem Kernloch stehenden Bereichs des Schraubenschafts auf. Dadurch erhöht sich die Qualität und Sicherheit der Befestigung.
Gegebenenfalls ergibt sich auch die Möglichkeit, Einschraubtiefen zu reduzieren, was zu einer geringeren Gussaugenhöhe, kürzeren Schrauben, weniger Gewicht, einer Bauraumoptimierung sowie vereinfachten Gießprozessen führt. Ferner können bei hoch beanspruchten Schraubenverbindungen mit den konischen Furchschrauben auch überelastische Anziehverfahren realisiert werden, ohne dass es zu signifikanten Plastifizierungen des Mutterngewindes in Schraubenaxialrichtung kommt.

## Beschreibung

Die Erfindung betrifft eine Furchschraube und ihre Verwendung zum Befestigen von Gegenständen.

Furchschrauben sind Schrauben, die sich in ein Loch, in das sie eingeschraubt werden, während des Einschraubens ihr Gewinde selbst herstellen. Dieses Gewinde wird durch Materialverdrängung erzeugt, also nicht durch schneiden. Damit solche Furchschrauben in der Lage sind, sich ein Gewinde herzustellen, haben sie einen Querschnitt in Form eines abgerundeten Polygons mit normalerweise drei Ecken.

An ihrem vorderen dem Schraubenkopf abgewandten Ende können sie eine Furchzone aufweisen, wo sich der Durchmesser erweitert. Damit soll erreicht werden, dass sich das Gewinde im Spitzenbereich des Schafts zunächst allmählich formen lässt. Die Furchzone beträgt etwa 1 bis 5 Gewindegänge. Vom Ende der Furchzone bis zum Schraubenkopf haben die bekannten Furchschrauben eine zylindrische Form.

Bei der Herstellung von Gegenständen durch Gießverfahren ist es >üblich, Befestigungsstellen mit herzustellen. Befestigungspunkte können die Form von kurzen Vorsprüngen aufweisen, in denen normalerweise ein Sackloch oder manchmal auch ein Durchgangsloch ausgebildet ist. Im folgenden wird dies als Kernloch bezeichnet. Dieses Kernloch ist nach Herstellung aufgrund der Herstellungsbedingungen leicht konisch. Durch die Verwendung von Furchschrauben kann man an derartigen Befestigungspunkten Befestigungen vornehmen, ohne in diese Sacklöcher ein Gewinde einschneiden zu müssen. Zusätzlich hat die Verwendung von Furchschrauben auch den Vorteil, dass keine Späne entstehen.

Bei der Verwendung bekannter Furchschrauben hat es sich herausgestellt, dass man eine größere Gewindeüberdeckung zwischen dem in der Wand des Sacklochs geformten Gewinde und dem Gewinde des Schraubenschafts nur in dem vorderen Bereich des Schraubenschafts erreicht. Nimmt man eine im Durchmesser größere Schraube, so wird die Schraube bei vollständigem Eindrehen aufgrund eines zu hohen Widerstands zerstört. Wenn nun aber Befestigungen gefordert werden, die hohen Kräften widerstehen sollen, so hat eine Vertiefung des Sacklochs und eine längere Schraube keine Wirkung, wenn die Schraube nur in einem kurzen Bereich ihres Schraubenschafts überhaupt eine ausreichende Gewindeüberdeckung aufweist.

Der Erfindung liegt die Aufgabe zu Grunde, eine Möglichkeit zu schaffen, ohne erhebliche Vergrößerung des Einschraubdrehmoments eine größere Haltekraft von Furchschrauben zu schaffen.

Zur Lösung dieser Aufgabe schlägt die Erfindung eine Furchschraube mit den im Anspruch 1 genannten Merkmalen vor. Weiterbildungen der Erfindung sind Gegenstand von Unteransprüchen.

Die von der Erfindung vorgeschlagene Furchschraube hat also über den Teil der Länge des Schafts, der mit dem von der Schraube in einem Loch geformten Gewinde in Eingriff stehen soll, eine konische Form. Dieser Bereich wird im Folgenden auch als der Eingriffsbereich des Gewindes beziehungsweise des Schafts bezeichnet.

Wird nun die Schraube in ein Kernloch, das durch Gießen hergestellt ist und dadurch eine Entformschräge aufweist, eingeschraubt, so wird das Gegengewinde in dem Loch gleichmäßig erzeugt und es entsteht nicht nur im vorderen Bereich, sondern auch im hinteren Bereich und praktisch über die gesamte Länge des Gewindes eine gleichmäßig hohe Gewindeüberdeckung, ohne dass zu hohe Furchmomente auftreten.

Auch bei Verwendung in einem zylindrischen Loch hat diese Schraube Vorteile, da sich die aufzuwendenden Drehmomente verringern lassen, ohne dass sich die Festigkeit der Schraubverbindung verschlechtert. Ferner ergeben sich auch Vorteile in Blechdurchzügen. Bei Verwendung herkömmlicher Furchschrauben mit zylindrischen Schaft kommt es im eigentlichen Durchzugsbereich zur Aufweitung in radialer Richtung und auch zu erhöhten Spannungen im Durchzug, welche zu Rissen führen können. Bei Verwendung einer konischen Schraube wird im Durchzugsbereich diese radiale Aufweitung des Durchzugs reduziert und im voll tragenden Bereich des Blechs dennoch eine volle Gewindeüberdeckung erreicht.

Auch die von der Erfindung vorgeschlagene Furchschraube kann zusätzlich am vorderen Ende eine Furchzone aufweisen, die dazu bestimmt ist, den Beginn des Furchens zu erleichtern. Diese ersten Gewindegänge brauchen nicht an der gewünscht hohen Gewindeüberdeckung teilzuhaben.

In dem Eingriffsbereich kann die Furchschraube in Weiterbildung der Erfindung insbesondere eine Konizität zwischen etwa 0,5° und etwa 3° aufweisen. Es hat sich herausgestellt, dass diese Konizität für die meisten Anwendungsfälle geeignet ist. In Sonderfällen, wo eine größere Konizität des Lochs, in das die Schraube eingeschraubt werden soll, vorhanden ist, kann auch eine größere Konizität gegeben sein.

In Weiterbildung der Erfindung kann vorgesehen sein, dass sich die Konizität des Schraubenschafts und damit auch des Gewindes der Furchschraube von dem Ende der Furchzone bis zu der Anlagefläche des Schraubenkopfs fortsetzt.

Es ist andererseits aber auch möglich, dass zwischen dem Ende des konischen Eingriffsbereichs und der Anlagefläche des Schraubenkopfs ein zylindrischer Bereich vorgesehen ist. Dieser zylindrische Bereich kann ein Gewinde aufweisen, also eine Fortsetzung des konischen Furchgewindes. Es ist aber ebenfalls möglich, dass dieser Bereich glattflächig ausgebildet ist, also kein Gewinde aufweist. Ferner ist es auch möglich, dass der gewindefreie Bereich als Dehnschaft ausgebildet ist.

Der Durchmesser dieses Bereichs zwischen dem Ende des Eingriffsbereichs und der Anlagefläche des Schraubenkopfs kann dem Rolldurchmesser der Schraube entsprechend, oder dem Gewindekerndurchmesser oder dem Gewindenenndurchmesser. In Sonderfällen kann auch größer sein. Unter Durchmesser ist bei einem abgerundet polygonalen Querschnitt natürlich eine Querabmessung an der gleichen Stelle des Querschnitts zu verstehen.

Es ist ebenfalls möglich, dass der Durchmesser des zylindrischen gewindefreien Bereichs kleiner ist als der Kerndurchmesser des Gewindebereichs des Schafts. Damit kann eine Dehnschraube verwirklicht werden.

Eine optimale Befestigung erreicht man dann, wenn die Konizität des Eingriffsbereichs des Schraubenschafts beziehungsweise seines Gewindes der Konizität des Lochs entspricht, in dem die Furchschraube nach der Erfindung ein Gewinde furchen soll.

Die Erfindung schlägt ebenfalls die Verwendung einer konischen Schraube vor, wobei die Schraube in ein Kernloch eingeschraubt wird. Es kann sich sowohl um ein zylindrisches als auch insbesondere um ein konisches Kernloch handeln, wobei vorzugsweise die Konizität des Schraubenschafts an die Konizität des Kernlochs angepasst ist.

Bei dem Kernloch kann es sich um ein Sackloch als auch um ein durchgehendes Loch handeln.

Die Erfindung schlägt ebenfalls die Verwendung einer konischen Furchschraube, wie sie hierin beschrieben wurde, zur Befestigung vor, bei der die Furchschraube in einen Durchzug, insbesondere einen Blechdurchzug eingeschraubt wird.

Weitere Merkmale, Einzelheiten und Vorzüge der Erfindung ergeben sich aus den Ansprüchen und der Zusammenfassung, deren beider Wortlaut durch Bezugnahme zum Inhalt der Beschreibung gemacht wird, der folgenden Beschreibung bevorzugter Ausführungsformen der Erfi n-dung sowie anhand der Zeichnung. Hierbei zeigen:
- Figur 1: die Seitenansicht einer Furchschraube nach der Erfindung;
- Figur 2: einen Schnitt durch ein Gehäuseteil mit einem Sackloch;
- Figur 3: einen Schnitt durch eine Befestigung an dem in Figur 2 dar- gestellten Gehäuseteil;
- Figur 4: einen vergrößerten Ausschnitt des Eingriffs des Schrauben- gewindes in die Wand des Sacklochs;
- Figur 5: eine der Figur 2 entsprechende Darstellung bei einer geän- derten Ausführungsform;
- Figur 6: einen weiteren Anwendungsfall;
- Figur 7: den Anwendungsfall der Figur 6 mit Schraube.

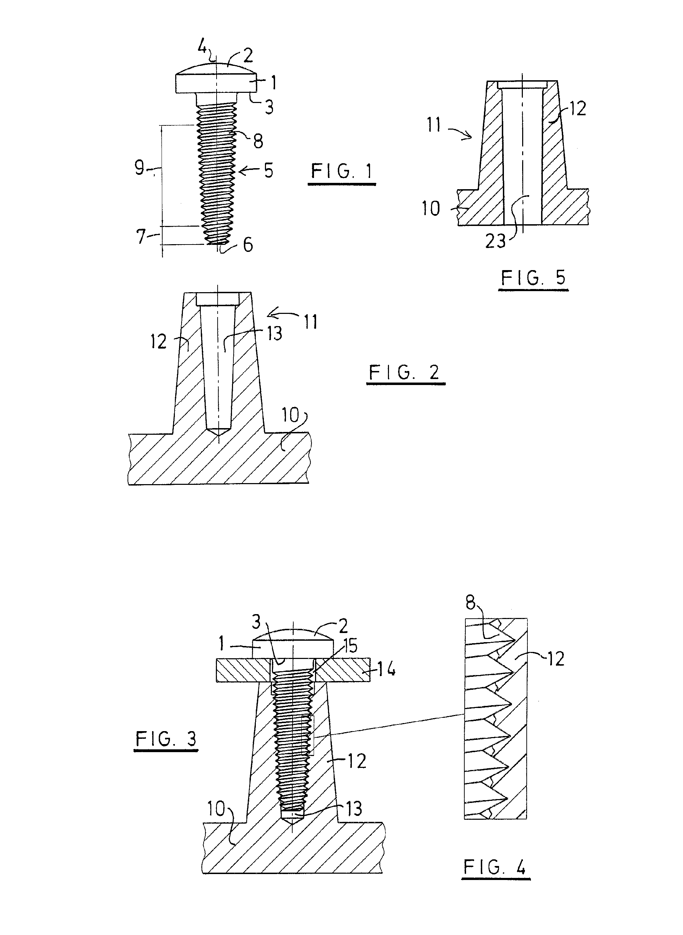

Die in Figur 1 in Seitenansicht dargestellte Schraube enthält einen Schraubenkopf 1, bei dem es sich im dargestellten Beispiel um einen Linsenkopf handelt. In einer Stirnfläche 2 des Schraubenkopfs 1 ist eine Schraubenantriebsausbildung angeordnet, beispielsweise ein Schlitz, ein Kreuzschlitz oder eine ähnliche Anordnung. Der Schraubenkopf 1 weist eine in einer Ebene liegende eine Anlagefläche 3 bildende Unterseite auf. Die Ebene verläuft senkrecht zur Schraubenachse 4, die strichpunktiert angedeutet ist. Von der Unterseite des Schraubenkopfs 1 ausgehend erstreckt sich ein Schaft 5 der Schraube bis zu einem vorderen Ende 6, das in einer ebenen Stirnfläche endet. Die ersten drei Gewindegänge bilden eine Furchzone 7, daran anschließend verläuft der Schaft 5 der Schraube konisch mit einem konstanten Kegelwinkel. Die Konizität reicht so weit wie das Gewinde 8 der Schraube. Von dem Ende des Gewindes 8 bis zur Unterseite des Schraubenkopfs 1 ist der Schaft 5 zylindrisch und glatt.

Die Furchzone 7 dient dazu, in einem zunächst noch glattwandigen Kernloch das Gewinde auszubilden. Dabei ermöglicht die Furchzone 7 ein besseres Ansetzen der Schraube und bewirkt gleichzeitig eine Zentrierfunktion. Andererseits erfolgt genau in diesem konischen Bereich die eigentliche Formung des Muttergewindes durch die Schraube.

Der sich an die Furchzone 7 anschließende Eingriffsbereich 9 ist, wie bereits erwähnt, konisch. Die Konizität in diesem Bereich 9 unterscheidet sich von dem Winkel in der Furchzone 7. Sie beträgt zwischen etwa 0,5 und 3°.

Die Figur 2 zeigt als Beispiel für die Anwendung einer solchen Schraube einen Teil eines Gehäuses 10, an dem bei der Herstellung des Gehäuses 10 bereits ein Befestigungspunkt 11 mit angegossen wird. Der Befestigungspunkt 11 enthält einen Dom 12, der gegenüber dem restlichen Teil des Gehäuses 10 vorspringt. Der Dom 12 enthält eine Ausnehmung in Form eines Sacklochs 13, das bis zu der Gehäusewand 10 reicht. Wegen der Herstellung durch ein Gussverfahren weist die Wand des Sacklochs 13 eine Entformungsschräge auf, so dass das Sackloch 13 leicht konisch ist. Seine Wand ist nach der Herstellung glatt ausgebildet, also ohne ein Gewinde. An diesem Dom 12 soll jetzt ein Bauteil 14 befestigt werden, wozu die in Figur 1 dargestellte Schraube dienen soll. Das Ergebnis dieser Befestigung ist in Figur 3 dargestellt. Die Furchschraube wird durch ein Loch 15 des zu befestigenden Bauteils 14 hindurchgesteckt und in das Sackloch 13 eingeschraubt. Dabei formt sich das Gewinde 8 des Gewindeschafts 5 sein Gegengewinde. Im dargestellten Beispiel ist die Konizität des an die Furchzone 7 anschließenden Teils des Schraubenschafts 5 identisch mit der Konizität des Sacklochs 13. Dadurch ist die Gewindeüberdeckung über die gesamte Länge dieses Bereichs der Schraube, in Figur 1 mit dem Bezugszeichen 9 bezeichnet, gleich groß. Dies bedeutet, dass das Gewinde in seinem Eingriffsbereich 9 praktisch über die gesamte Länge eine sehr hohe und gleichmäßige Gewindeüberdeckung aufweist. Dies ist in vergrößertem Maßstab in der Figur 4 dargestellt.

Falls die Konizität des Eingriffsbereichs 9 nicht exakt identisch mit der Konizität des Sacklochs 13 ist, tritt immer noch eine Verbesserung gegenüber einer Furchschraube mit einem zylindrischen Eingriffsbereich auf.

Die Figur 5 zeigt als Beispiel für eine weitere Anwendung einer solchen Schraube einen Teil eines Gehäuses 10, an dem ein Befestigungspunkt 11 mit angegossen ist. Der Befestigungspunkt 11 enthält einen Dom 12, der gegenüber der Wand des Gehäuses 10 vorspringt. Der Dom 12 enthält ebenfalls eine Ausnehmung in Form eines durchgehenden Lochs 23. Auch dieses durchgehende Loch 23 weist eine Entformungsschräge auf, so dass es leicht konisch verläuft. Die Wand des durchgehenden Lochs 23 ist glatt. Auch hier führt die Verwendung einer konischen Schraube zu einer Verbesserung der Befestigung.

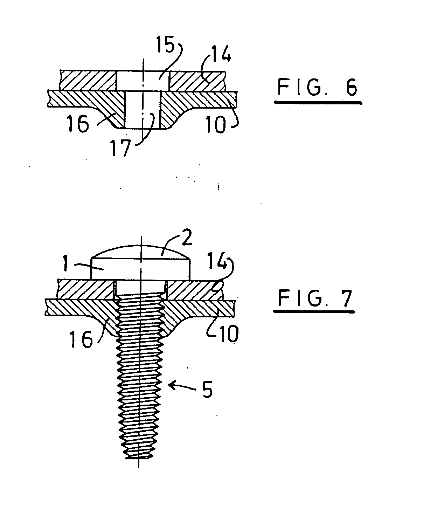

Die Figur 6 zeigt einen weiteren Anwendungsfall für eine konische Furchschraube. Ein Bauelement 14, das eine Durchgangsöffnung 15 aufweist, soll an einem Bauteil, beispielsweise einem Gehäuse 10, angeschraubt werden. Das Gehäuse 10 weist an der Stelle, wo die Verschraubung erfolgen soll, einen Durchzug 16 mit einer zylindrischen Öffnung 17 auf. Das Ergebnis der Verschraubung ist in Figur 7 dargestellt. Die Schraube mit dem konischen Schaft 5 und dem sich über die gesamte Länge des Schafts 5 erstreckenden Gewinde 8 ist optimal an die Tragfähigkeit des Durchzugs 16 angepasst. Im oberen Bereich des Blechs ist der Schraubendurchmesser größer. Daher ist dort die Haltekraft hoch. Im unteren Bereich des Durchzugs 16 ist der Durchmesser der Schraube 5 kleiner. Daher wird der Durchzug in diesem Bereich weniger aufgeweitet, wodurch sich die Radialspannung im Durchzugsbereich an dieser Stelle reduziert. Dies führt dazu, dass die Gefahr einer Rissbildung in einem Durchzug reduziert wird.

Solche Blechdurchzüge als Durchgangsloch werden häufig dort verwendet, wo es nur einen begrenzten Bauraum gibt.

Gegebenenfalls ergibt sich auch die Möglichkeit, Einschraubtiefen zu reduzieren, was zu einer geringeren Gussaugenhöhe, kürzeren Schrauben, weniger Gewicht, einer Bauraumoptimierung sowie vereinfachten Gießprozessen führt. Ferner können bei hoch beanspruchten Schraubenverbindungen mit den konischen Furchschrauben auch überelastische Anziehverfahren realisiert werden, ohne dass es zu signifikanten Plastifizierungen des Mutterngewindes in Schraubenaxialrichtung kommt.

## Patentansprüche

1. Furchschraube, mit
1.1 einem einen Schraubenantrieb aufweisenden Schraubenkopf (1),
1.2 einem sich an den Schraubenkopf (1) anschließenden Schraubenschaft (5), der
1.2.1 einen abgerundet polygonalen oder kreisrunden Querschnitt und
1.2.2 ein Furchgewinde (8) aufweist, wobei
1.3 der Schraubenschaft (5) mindestens in dem zum Gewindeeingriff in einem Loch (13) bestimmten Bereich (9) konisch ausgebildet ist.

2. Furchschraube nach Anspruch 1, mit einer am vorderen Ende (6) des Schraubenschafts (5) angeordneten Furchzone (7) deren axiale Erstreckung zwischen 0,5 und dem fünffachen des Nenndurchmessers der Schraube beträgt.

3. Furchschraube nach Anspruch 1 oder 2, bei der der Schraubenschaft (5) in seinem Eingriffsbereich (9) eine Konizität zwischen etwa 0,5° und 3° aufweist.

4. Furchschraube nach einem der vorhergehenden Ansprüche, bei der sich die Konizität des Schraubenschafts (5) bis zu der Anlagefläche (3) des Schraubenkopfs (1) fortsetzt.

5. Furchschraube nach einem der Ansprüche 1 bis 3, bei der zwischen dem konischen Eingriffsbereich (9) und der Anlagefläche (3) des Schraubenkopfs (1) ein zylindrischer Bereich vorgesehen ist.

6. Furchschraube nach Anspruch 5, bei der der zylindrische Bereich mindestens teilweise ein Gewinde aufweist.

7. Furchschraube nach Anspruch 5 oder 6, bei der der zylindrische Bereich mindestens teilweise gewindefrei ist.

8. Furchschraube nach Anspruch 7, bei der der Durchmesser des zylindrischen Bereichs dem Rolldurchmesser, dem Gewindekerndurchmesser oder dem Gewindenenndurchmesser entspricht.

9. Furchschraube nach Anspruch 7, bei der der Durchmesser des zylindrischen Bereichs kleiner ist als der Kerndurchmesser.

10. Furchschraube nach einem der vorhergehenden Ansprüche, bei der das Gewinde über mindestens einen Teil der Länge symmetrische Gewindeflanken aufweist.

11. Furchschraube nach einem der vorhergehenden Ansprüche, bei der das Gewinde über mindestens einen Teil der Länge des Schafts asymmetrische Gewindeflanken aufweist.

12. Furchschraube nach einem der vorhergehenden Ansprüche, bei der das Gewinde zum Furchen eines metrischen Gewindes ausgebildet ist.

13. Furchschraube nach einem der vorhergehenden Ansprüche, bei der das Gewinde zum Furchen eines nicht metrischen Gewindes ausgebildet ist.

14. Furchschraube nach einem der vorhergehenden Ansprüche, als Schraube für die Kunststoffdirektverschraubung ausgebildet.

15. Furchschraube nach einem der Ansprüche 1 bis 13, als Blechschraube ausgebildet.

16. Furchschraube nach einem der Ansprüche 1 bis 13, als Schraube für Druckguss ausgebildet.

17. Verwendung einer Furchschraube nach einem der vorhergehenden Ansprüche zur Befestigung in einem Kernloch (13).

18. Verwendung nach Anspruch 17 zur Befestigung in einem zylindrischen Kernloch.

19. Verwendung einer Furchschraube nach Anspruch 17 zur Befestigung in einem konischen Kernloch (13), dessen Konizität der Konizität des Schraubenschafts (5) der Furchschraube mindestens angenähert entspricht.

20. Verwendung einer Furchschraube nach einem der Ansprüche 17 bis 19, bei der das Kernloch ein Sackloch (13) ist.

21. Verwendung einer Furchschraube nach einem der Ansprüche 17 bis 19, bei der das Kernloch ein Durchgangsloch (23) ist.

22. Verwendung nach einem der Ansprüche 17 bis 19, bei der das Kernloch (17) in einem Durchzug (16) gebildet ist.
